(19) Europäisches Patentamt
European Patent Office
Office européen des brevets

(11) **EP 2 351 204 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **09744398.0**

(22) Anmeldetag: **30.10.2009**

(51) Int Cl.:
*H02P 9/00* (2006.01)     *H02P 9/10* (2006.01)
*F03D 7/04* (2006.01)     *H02J 3/01* (2006.01)
*H02J 3/24* (2006.01)     *H02P 29/00* (2006.01)

(86) Internationale Anmeldenummer:
**PCT/EP2009/064365**

(87) Internationale Veröffentlichungsnummer:
**WO 2010/057762 (27.05.2010 Gazette 2010/21)**

(54) **VORRICHTUNG ZUR REGELUNG EINER DOPPELT GESPEISTEN ASYNCHRONMASCHINE**

DEVICE FOR CONTROLLING A DOUBLY FED INDUCTION MACHINE

DISPOSITIF DE COMMANDE D'UNE MACHINE À INDUCTION À  & xA;DOUBLE ALIMENTATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.11.2008 DE 102008037566**

(43) Veröffentlichungstag der Anmeldung:
**03.08.2011 Patentblatt 2011/31**

(73) Patentinhaber: **Woodward Kempen GmbH 47906 Kempen (DE)**

(72) Erfinder:
• **ENGELHARDT, Stephan**
  **47665 Sonsbeck (DE)**
• **KRETSCHMANN, Joerg**
  **47906 Kempen (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A2- 1 796 259     CN-A- 101 141 111

• **GAILLARD A ET AL: "Active filtering capability of WECS with DFIG for grid power quality improvement", IEEE INTERNATIONAL SYMPOSIUM ON INDUSTRIAL ELECTRONICS (ISIE 2008) CAMBRIDGE, UK, 30. Juni 2008 (2008-06-30), - 2. Juli 2008 (2008-07-02), Seiten 2365-2370, XP002634987, IEEE Piscataway, NJ, USA DOI: 10.1109/ISIE.2008.4676984 ISBN: 978-1-4244-1665-3**
• **MASSING J R ET AL: "Design and control of doubly-fed induction generators with series grid-side converter", IECON 2008 - 34TH ANNUAL CONFERENCE OF IEEE INDUSTRIAL ELECTRONICS SOCIETY. ORLANDO, FL, USA, 10. November 2008 (2008-11-10), - 13. November 2008 (2008-11-13), Seiten 139-145, XP002634988, IEEE Piscataway, NJ, USA DOI: 10.1109/IECON. 2008.4757942 ISBN: 978-1-4244-1767-4**
• **HOLTZ J ET AL: "Suppression of time-varying resonances in the power supply line of AC locomotives by inverter control", IEEE TRANSACTIONS ON INDUSTRIAL ELECTRONICS, Bd. 39, Nr. 3, 1. Juni 1992 (1992-06-01), - 30. Juni 1992 (1992-06-30), Seiten 223-229, XP002634989, USA ISSN: 0278-0046, DOI: 10.1109/41.141624**
• **LINDHOLM M ET AL: "Harmonic analysis of doubly fed induction generators", FIFTH INTERNATIONAL CONFERENCE ON POWER ELECTRONICS AND DRIVE SYSTEMS. SINGAPORE, Bd. 2, 17. November 2003 (2003-11-17), - 20. November 2003 (2003-11-20), Seiten 837-841, XP002634990, IEEE Piscataway, NJ, USA ISBN: 0-7803-7885-7**

EP 2 351 204 B1

## EP 2 351 204 B1

**Beschreibung**

Die Erfindung betrifft eine Vorrichtung zur Regelung einer doppelt gespeisten Asynchronmaschine, vorzugsweise für eine Energieerzeugungsanlage, insbesondere für eine Wind- oder Wasserkraftanlage, mit einem Zwischenkreisumrichter, welcher rotorseitig an die doppelt gespeiste Asynchronmaschine angeschlossen ist, wobei der Zwischenkreisumrichter einen rotorseitigen und einen netzseitigen Umrichter aufweist, und mindestens ein Regelglied zur Regelung des Zwischenkreisumrichters vorgesehen ist. Die Erfindung betrifft auch ein Verfahren zur Regelung einer doppelt gespeisten Asynchronmaschine, vorzugsweise für eine Energieerzeugungsanlage. Die Erfindung betrifft weiterhin.ein Computerprogramm, ein Computerprogrammprodukt, sowie eine Wind- oder Wasserkraftanlage zur Erzeugung elektrischer Energie mit einer doppelt gespeisten Asynchronmaschine.

Doppelt gespeiste Asynchronmaschinen werden üblicherweise bei Anlagen mit variabler Rotordrehzahl, insbesondere bei Wind- oder Wasserenergieanlagen eingesetzt. Unter Verwendung eines an den Rotor angeschlossenen Zwischenkreisumrichters kann die Rotorspannung so geregelt werden, dass die Frequenz und die Phasenlage der Statorspannung trotz variabler Rotordrehzahl konstant bleibt. Der Stator kann somit direkt oder über einen Transformator an das Netz angeschlossen werden. Die einschlägigen Standards für die Grenzwerte von Oberschwingungs-Netzrückwirkuhgen machen den Einsatz von Netzfiltern für das doppelt gespeiste System erforderlich. Abhängig von den Impedanzen des Netzes und dem Design des Netzfilters ergeben sich daraus Resonanz-Eigenschaften der Reglungsstrecke, die in einigen Fällen zu einer Instabilität des Gesamtsystems aus Regelungsstrecke und Regelungssystem führen können, die sowohl das Regelungssystem für den rotorseitigen Umrichter als auch das Regelungssystem für den netzseitigen Umrichter betrifft. Die Wahrscheinlichkeit für derartige Instabilitäten wächst mit zunehmender Anzahl von parallel geschalteten Einzelfiltern und kann insbesondere bei großen Windparks zu Abschaltung von Anlagen und auch zur Zerstörung von Komponenten führen. Zur Dämpfung solcher Resonanzen werden im Stand der Technik bei der Auslieferung des Systems bzw. bei seiner Installation an den jeweiligen Anlagenstandort angepasste, speziell dimensionierte Netzfilter eingebaut, welche eine unveränderbare frequenzabhängige Dämpfung aufweisen, wie beispielsweise in Durstewitz et al., "Netzspezifische Filterauslegung", Kasseler Symposium Energie-Systemtechnik 1998, beschrieben wird.

In einem Windpark ändert sich die Wahrscheinlichkeit für das Auftreten von Instabilitäten, wenn der Windpark um eine neue Windenergieanlage erweitert wird oder wenn eine Windenergieanlage, z.B. zu Wartungszwecken, vom Netz getrennt wird. Durch derartige Änderungen können sogar neue Resonanzen im System entstehen. Dies hat zur Folge, dass die bisher bekannten Netzfilter aus dem Stand der Technik nicht mehr optimal an die veränderten Resonanzeigenschaften des Systems angepasst sind und die Resonanzen nicht mehr ausreichend dämpfen, so dass es zu einer Erhöhung der Wahrscheinlichkeit für ein Auftreten von Systeminstabilitäten kommt.

Gegebenenfalls muss der Netzfilter sogar ausgebaut und ein neuer Netzfilter mit einer auf die neuen Resonanzeigenschaften des Systems angepassten, festen frequenzabhängigen Dämpfung eingebaut werden. Dies ist mit höhen Kosten verbunden.

Aus "Active filtering capability of WECS with DFIG for grid power quality improvement", A. Gaillard et al, XP-002634987,30. Juni 2008 bis 2. Juli 2008 ist eine Vorrichtung mit den Merkmalen des Oberbegriffs des Patetnanspruches 1 bekannt. Einen an veränderbare Resonanzbedingungen anpassbares Dämpfungsglied offenbart die D1 nicht.

Der Aufsatz "Design and control of doubly-fed induction generators with series grid-side converter", J. R. Massing et al, 10. bis 13. November 2008 beschäftigt sich mit aus dem Gleichgewicht geratenen Netzspannungen, also mit Netzspannungsschwankungen und nicht mit Resonanzen, welche sich zwischen der Regelung der Asynchronmaschine aufgrund veränderter Netzimpedanzen ergeben.

Das Dokument "Suppression of time-varying resonances in the power supply line of AC locomotives by inverter control", Joachim Holtz et al,, IEEE Transaction on Industrial Electronics, Vol. 39, No. 2, 3. Juni 1992 beschäftigt sich ebenfalls nicht mit dem Problem eine doppelt gespeiste Asynchronmaschine an unterschiedlichen Resonanzeigenschaften eines Netzes anzupassen, sondern vielmehr mit der Unterdrückung von harmonischen Schwingungen, welche durch eine elektrische Lokomotive in das Netz abgegeben wird. Gleiches gilt auch für den Aufsatz "Harmonic analysis of doubly fed induction generators", M. Lindholm et al, 17. bis 20. November 2003, denn dieser befasst sich lediglich mit harmonischen Oberschwingungen der doppelt gespeisten Asynchronmaschine und deren Eliminierung

Der vorliegenden Erfindung liegt daher die Aufgabe zu Grunde, eine Vorrichtung zur Regelung einer doppelt gespeisten Asynchronmaschine zur Verfügung zu stellen, bei welcher die Dämpfung an veränderte Resonanzeigenschaften angepasst werden kann.

Diese technische Aufgabe wird erfindungsgemäß dadurch gelöst, dass mindestens ein Software- und/oder Hardware-basiertes Dämpfungsglied vorgesehen ist, welches nach den Ansprüchen 1 und 13 veränderbare Dämpfungseigenschaften aufweist. Weitere Ausführungsformen sind in den Unteransprüchen angegeben.

Auf diese Weise wird erreicht, dass bei einer Änderung der Resonanzeigenschaften eines Systems mit einer doppelt gespeisten Asynchronmaschine und einem geregelten Zwischenkreisumrichter die Dämpfungseigenschaften des mindestens einen Dämpfungsglieds an unterschiedliche Resonanzeigenschaften des Netzes angepasst werden

2

können. Ein mit hohen Kosten verbundener Austausch eines Netzfilters wird dadurch vermieden.

In einer bevorzugten Ausführungsform der Vorrichtung sind die Dämpfungseigenschaften des mindestens einen Dämpfungsglieds im Frequenzbereich bis 2000 Hz, vorzugsweise bis 1200 Hz variabel einstellbar. Es hat sich gezeigt, dass kritische Resonanzen eines Systems mit einer doppelt gespeisten Asynchronmaschine und einem geregelten Zwischenkreisumrichter in dem Frequenzbereich bis 2000 Hz, insbesondere bis 1200 Hz auftreten. Die Eingrenzung des Frequenzbereiches erlaubt den Einsatz einfacher und preisgünstiger Dämpfungsglieder.

Ein besonders einfaches und kostengünstiges Dämpfungsglied wird in einer bevorzugten Ausführungsform der Vorrichtung dadurch erreicht, dass das Hardware-basierte Dämpfungsglied wenigstens eine resistive und/oder eine induktive Komponente aufweist, welche in ihrer Impedanz veränderbar ist. Dabei stellt die Ausführungsform mit entweder einer resistiven oder einer induktiven Komponente, die in ihrer Impedanz veränderbar ist, eine besonders einfache und kostengünstige Variante dar. Durch die Ausführungsform mit einer resistiven und einer induktiven Komponenten, die jeweils in ihren Impedanzen veränderbar sind, wird eine besonders große Anpassungsfähigkeit des Dämpfungsgliedes erreicht. Es ist auch denkbar, dass das Dämpfungsglied eine kapazitive Komponente aufweist, welche in ihrer Impedanz veränderbar ist.

In einer weiteren bevorzugten Ausführungsform der Vorrichtung weist die wenigstens eine resistive und/oder induktive Komponente mehrere Abgriffe oder Anzapfungen auf. Die Größe des Widerstandes bzw. der Induktivität kann bei den verschiedenen Abgriffen bzw. Anzapfungen gleich oder verschieden groß sein und die Abgriffe bzw. Anzapfungen können je nach den gewünschten Dämpfungseigenschaften variabel angeschlossen werden. Auf diese Weise wird auf eine besonders einfache Art erreicht, dass das Dämpfungsglied veränderbare Dämpfungseigenschaften aufweist. So können die Dämpfungseigenschaften einfach über die Wahl der Abgriffe bzw. der Anzapfungen des Widerstands bzw. der Induktivität beeinflusst werden.

Die Anpassung der Dämpfungseigenschaften an veränderte Resonanzeigenschaften des Netzes wird in einer weiteren bevorzugten Ausführungsform der Vorrichtung dadurch erreicht, dass ein Software-basiertes netzseitiges und/oder rotorseitiges Dämpfungsglied vorgesehen ist, welches ein Dämpfungssignal erzeugt. Durch diese Software-basierte Anpassung der Dämpfungseigenschaften kann eine Anpassung an veränderte Netzeigenschaften besonders einfach und schnell vorgenommen werden. Unter den Netzeigenschaften werden insbesondere die Resonanzeigenschaften des Netzes verstanden. Die Verwendung entweder eines Software-basierten rotorseitigen Dämpfungselementes oder eines Software-basierten netzseitigen Dämpfungselementes ist besonders einfach, da nur ein Dämpfungselement angepasst werden muss. Die Benutzung eines Software-basierten rotorseitigen Dämpfungselementes und eines Software-basierten netzseitigen Dämpfungselementes führt zu einer besonders effektiven Dämpfung, da das System sowohl rotorseitig als auch netzseitig gedämpft wird.

In einer weiteren bevorzugten Ausführungsform der Vorrichtung sind Mittel vorgesehen, welche das in den Umrichter gespeiste Stellsignal seriell oder parallel aus dem mit dem Regelglied erzeugten Regelsignal und dem Dämpfungssignal erzeugen. Unter dem Stellsignal wird das Signal verstanden, mit dem der netzseitige und/oder rotorseitige Umrichter angesteuert wird. So kann bei der parallelen Erzeugung beispielsweise ein Additionsmodul vorgesehen sein, in dem das Regelsignal und das Dämpfungssignal addiert werden. Bei der seriellen Erzeugung des Stellsignals dient das Regelsignal als Eingangsgröße des Dämpfungssignals oder umgekehrt.

Eine weitere bevorzugte Ausführungsform der Vorrichtung wird dadurch erreicht, dass Mittel vorgesehen sind, durch die der Statorstrom $i_S$, die Statorspannung $u_S$, der Strom des rotorseitigen Umrichters $i_{MSC}$, der Netzstrom $i_G$ und/oder die Netzspannung $u_G$ ermittelt werden und als Eingangsgrößen am rotorseitigen Dämpfungsglied zur Verfügung stehen. Es hat sich gezeigt, dass diese Eingangsgrößen insbesondere wegen ihrer Frequenzgänge besonders gut zur Erzeugung des rotorseitigen Dämpfungssignals geeignet sind. Bevorzugt wird der Strom des rotorseitigen Umrichters oder der Statorstrom gewählt.

In einer weiteren bevorzugten Ausführungsform der Vorrichtung sind Mittel vorgesehen, durch die der Strom des netzseitigen Umrichters $i_{LSC}$, der Netzstrom $i_G$, die Netzspannung $u_G$, die Spannung des netzseitigen Wechselrichterzweiges des Dreiphasentransformators $u_{tr,LSC}$ und/oder die Statorspannung $u_S$ ermittelt werden und als Eingangsgrößen am netzseitigen Dämpfungsglied zur Verfügung stehen. Es hat sich gezeigt, dass diese Eingangsgrößen insbesondere wegen ihrer Frequenzgänge besonders gut zur Erzeugung des netzseitigen Dämpfungssignals geeignet sind. Bevorzugt wird der Strom des netzseitigen Umrichters $i_{LSC}$ gewählt.

Eine besonders gute Anpassung der Dämpfungseigenschaften des mindestens einen Dämpfungsgliedes wird in einer weiteren Ausführungsform der Vorrichtung dadurch erreicht, dass Mittel vorgesehen sind, mit denen die Regelstrecke des Zwischenkreisumrichters in einem Frequenzbereich bis 2000 Hz, vorzugsweise bis 1200 Hz angeregt werden kann. Unter der Regelstrecke des Zwischenkreisumrichters wird das System aus der doppelt gespeisten Asynchronmaschine, des Zwischenkreisumrichters, des zugehörigen Regelgliedes, sowie ggf. weitere angeschlossene Komponenten verstanden. Durch die Anregung der Regelstrecke ist es möglich, anhand der Antwort des Systems auf diese Anregung die Resonanzeigenschaften dieses Systems zu messen. Die Anregung wird bevorzugt in dem Frequenzbereich bis 2000 Hz, insbesondere bis 1200 Hz durchgeführt, da in diesem Bereich in der Regel besonders kritische Resonanzen des Systems auftreten. Für die Anregung der Regelstrecke eignet sich besonders ein Frequenzgenerator oder ein Pulsgeber.

In einer weiteren bevorzugten Ausführungsform der Vorrichtung sind Mittel vorgesehen, mit denen die Dämpfungsfunktion für mindestens ein Dämpfungsglied berechnet werden kann. Als Eingangsgröße für diese Berechnung können z.B. die Ergebnisgrößen, d.h. die Antwort des Systems, aus der oben beschriebenen Messung der Resonanzeigenschaften dienen. Auf diese Weise ist die Anpassung der Dämpfungseigenschaften des Dämpfungsgliedes besonders einfach und schnell möglich, da die Berechnung der Dämpfungsfunktion, insbesondere die Berechnung der Übertragungsfunktion G(z), weitgehend automatisch erfolgt und keine separate Berechnung der Dämpfungsfunktion, beispielsweise auf einem zusätzlichen Computer, erforderlich ist. Für die Mittel zur Berechnung eignet sich besonders ein mit einem Mikroprozessor gesteuertes Modul, welches bevorzugt einen elektronischen Speicher mit Befehlen enthält, deren Ausführung durch den Mikroprozessor die Berechnung der Dämpfungsfunktion bewirkt. Diese Ausführungsform ist besonders vorteilhaft in Kombination mit den Merkmalen der Ausführungsform, bei der Mittel vorgesehen sind, mit denen die Regelstrecke des Zwischenkreisumrichters in einem Frequenzbereich bis 2000 Hz, vorzugsweise bis 1200 Hz angeregt werden kann. So ist es beispielsweise denkbar, dass durch die Anregung der Regelstrecke die Resonanzeigenschaften des Systems ermittelt werden, aus denen dann mit den Mitteln zur Berechnung der Dämpfungsfunktion eine geeignete Dämpfungsfunktion unmittelbar berechnet werden kann.

Eine effektive Dämpfung von Resonanzen wird in einer weiteren bevorzugten Ausführungsform der Vorrichtung dadurch erreicht, dass mindestens ein Dämpfungsglied eine Phasenverschiebung bewirkt, welche zu einer Dämpfung führt.

In einer weiteren bevorzugten Ausführungsform der Vorrichtung bewirkt mindestens ein Dämpfungsglied einen im Wesentlichen über den gesamten Frequenzbereich bis 2000 Hz, vorzugsweise bis 1200 Hz, konstanten zusätzlichen Phasenvorschub. Diese Ausführungsform hat den Vorteil, dass die Verbesserung der Stabilitäts-Eigenschaften in einem größeren Frequenzbereich derart bewirkt wird, dass in sehr vielen Fällen eine individuelle Anpassung des Software-basierten Dämpfungsgliedes an die jeweilig unterschiedlichen Resonanzeigenschaften des Netzes überflüssig wird und statt dessen eine konstante Parametrierung des Software-basierten Dämpfungsgliedes für die meisten Netzkonfigurationen und Eigenschaften möglich ist. Auf diese Weise ist es auch möglich, Totzeiten des Regelgliedes auszugleichen.

Die Anpassung der Dämpfungseigenschaften wird in einer weiteren bevorzugten Ausführungsform der Vorrichtung dadurch vereinfacht, dass mindestens ein Dämpfungsglied vorgesehen ist, welches unveränderbare Dämpfungseigenschaften aufweist. Auf diese Weise können Resonanzen, die nur schwach von den Netzeigenschaften abhängig sind, gedämpft werden. Dadurch wird erreicht, dass das Dämpfungsglied, welches veränderbare Dämpfungseigenschaften aufweist, nur für die übrigen Resonanzen angepasst werden muss. Dies erlaubt den Einsatz einfacherer Dämpfungsglieder.

Die technische Aufgabe wird weiterhin mit einem Verfahren dadurch gelöst, dass Hardware- und/oder Software-basierte Dämpfungsglieder vorgesehen sind, welche veränderbare Dämpfungseigenschaften aufweisen, und die Dämpfungseigenschaften mindestens eines Hardware- und/oder-Software-basierten Dämpfungsgliedes nachträglich angepasst werden. Weitere Ausführungsformen sind in den Unteransprüchen angegeben.

Auf diese Weise kann auf einen teuren nachträglichen Austausch eines Hardware-basierten Netzfilters mit einer festen frequenzabhängigen Dämpfung verzichtet werden. Dies führt zu einer Kostenersparnis.

Vorzugsweise wird die Anpassung der Dämpfungseigenschaften jeweils nach einer Änderung der Netzeigenschaften durchgeführt. Auf die Änderung von Netzeigenschaften kann so sofort reagiert werden. Der Austausch von Hardware-basierten Netzfiltern mit einer festen frequenzabhängigen Dämpfung wird daher vermieden.

Eine besonders effektive und schnelle Dämpfung der Resonanzen in dem System wird in einer weiteren bevorzugten Ausführungsform des Verfahrens dadurch erreicht, dass die Regelstrecke im Frequenzbereich bis 2000 Hz, vorzugsweise bis 1200 Hz angeregt, die Antwortfunktion der Regelstrecke gemessen und mindestens ein Dämpfungsglied in Abhängigkeit der Antwortfunktion angepasst wird. Auf diese Weise ist es möglich, die Anpassung des Dämpfungsgliedes weitgehend oder vollständig zu automatisieren. Das Dämpfungsglied kann so einfach und schnell angepasst werden. So ist es denkbar, dass das Verfahren einmalig bei Installation der Anlage, regelmäßig in Intervallen oder jeweils bei Bedarf angewendet und die Dämpfung der Resonanzen in dem System optimiert wird.

In einer weiteren bevorzugten Ausführungsform des Verfahrens werden der Statorstrom $i_S$, die Statorspannung $u_S$, der Strom des rotorseitigen Umrichters $i_{MSC}$, der Strom des netzseitigen Umrichters $i_{LSC}$, die Spannung des netzseitigen Wechselrichterzweiges des Dreiphasentransformators $u_{tr,LSC}$, der Netzstrom $i_G$ und/oder die Netzspannung $u_G$ ermittelt und von mindestens einem Dämpfungsglied ein von mindestens einer dieser Größen abhängiges Dämpfungssignal erzeugt. Es hat sich gezeigt, dass diese Eingangsgrößen insbesondere wegen ihrer Frequenzgänge besonders gut zur Erzeugung des netz- und/oder rotorseitigen Dämpfungssignals geeignet sind.

Eine besonders effektive Dämpfung der Resonanzen wird in einer weiteren Ausführungsform des Verfahrens dadurch erreicht, dass das Dämpfungssignal in mit Netzfrequenz mitbewegten dq-Koordinaten berechnet wird. Auf diese Weise liegt der eingeschwungenen Zustand der Regelung, das heißt der Zustand, bei dem ausschließlich die Netzfrequenz auftritt, bei 0 Hz. Die Übertragungsfunktion kann dann in einfacher Weise so gewählt werden, dass die Dämpfung bei dieser Frequenz Null ist.

In einer weiteren bevorzugten Ausführungsform des Verfahrens wird das netzseitig und/oder rotorseitig in den Umrichter gespeiste Stellsignal aus einem Dämpfungssignal und dem netzseitigen und/oder rotorseitigen Regelsignal, insbesondere durch Addition, erzeugt, wobei optional jeweils ein Dämpfungsglied zur Erzeugung des Dämpfungssignals vorgesehen ist. Der Vorteil dieser Ausführungsform liegt darin begründet, dass unmittelbar auf das Regelsignal des Regelgliedes aktiv Einfluss genommen werden kann, um Dämpfungseigenschaften zu verändern.

Eine besonders einfache Beaufschlagung des Systems mit dem Dämpfungssignal wird in einer weiteren bevorzugten Ausführungsform des Verfahrens dadurch erreicht, dass die Kombination, insbesondere die Addition des Dämpfungssignals mit dem Regelsignal in ruhenden ab-Koordinaten erfolgt. Dies ist vorteilhaft, da das Regelsignal in der Regel bereits in ab-Koordinaten vorliegt und somit keine Transformation des Regelsignals in ein anderes Koordinatensystem erforderlich ist.

Die der Erfindung zu Grunde liegende Aufgabe wird auch durch ein Computerprogramm gelöst, wobei das Computerprogramm Befehle aufweist, deren Ausführung einen Prozessor veranlasst, das erfindungsgemäße Verfahren zur Regelung einer doppelt gespeisten Asynchronmaschine durchzuführen. Das vorgestellte Regelverfahren bei Software-basierten Dämpfungsgliedern eignet sich sehr gut zur Implementierung auf einem Mikroprozessor, der beispielsweise als Eingangsgrößen den Statorstrom $i_S$, die Statorspannung $u_S$, den Strom des rotorseitigen Umrichters $i_{MSC}$, den Strom des netzseitigen Umrichters $i_{LSC}$, die Spannung des netzseitigen Wechselrichterzweiges des Dreiphasentransformators $u_{tr,LSC}$, den Netzstrom $i_G$ und/oder die Netzspannung $u_G$ erhält und als Ausgangsgröße das Dämpfungssignal ausgibt. Eine nachträgliche Anpassung der Dämpfungsfunktion ist damit möglich. Diese kann beispielsweise nach festgelegten Intervallen oder bei Bedarf durchgeführt werden.

Die der Erfindung zu Grunde liegende Aufgabe wird auch durch ein Computerprogrammprodukt gelöst, wobei das Computerprogrammprodukt ein Computerprogramm enthält mit Befehlen, deren Ausführung einen Prozessor veranlasst, das erfindungsgemäße Verfahren durchzuführen. Das Computerprogrammprodukt kann beispielsweise ein Wechseldatenträger, wie zum Beispiel eine Speicherkarte, eine Diskette oder eine CD sein, auf der mindestens ein Computerprogramm mit den Befehlen zur Ausführung des erfindungsgemäßen Verfahrens abgespeichert ist.

Die der Erfindung zu Grunde liegende Aufgabe wird schließlich durch eine Wind- oder Wasserkraftanlage zur Erzeugung elektrischer Energie mit einer doppelt gespeisten Asynchronmaschine gelöst, in welcher eine erfindungsgemäße Vorrichtung vorgesehen ist.

Weitere Merkmale und Vorteile der vorliegenden Erfindung werden in der Beschreibung der Ausführungsbeispiele näher erläutert. In den Zeichnungen zeigen

Fig. 1     ein Blockschaltbild eines ersten Ausführungsbeispiels einer erfindungsgemäßen Vorrichtung zur Regelung einer doppelt gespeisten Asynchronmaschine,

Fig. 2     ein Blockschaltbild eines zweiten Ausführungsbeispiels einer erfindungsgemäßen Vorrichtung zur Regelung einer doppelt gespeisten Asynchronmaschine,

Fig. 3     ein Diagramm mit der Sprungantwort für ein drittes Ausführungsbeispiel einer Übertragungsfunktion,

Fig. 4     ein Diagramm mit dem Frequenzgang der Amplitude des Ausführungsbeispiels aus Fig. 3,

Fig. 5     ein Diagramm mit dem Frequenzgang der Phase des Ausführungsbeispiels aus Fig. 3,

Fig. 6     ein Blockschaltbild eines vierten Ausführungsbeispieles für ein Hardware-basiertes Dämpfungsglied,

Fig. 7     ein Blockschaltbild eines fünften Ausführungsbeispieles zur Durchführung eines Verfahrens zur Regelung einer doppelt gespeisten Asynchronmaschine mit einem Computerprogramm durch einen Prozessor und

Fig. 8     ein Blockschaltbild eines Ausführungsbeispiels eines Windparks mit Windkraftanlagen mit einer erfindungsgemäßen Vorrichtung zur Regelung einer doppelt gespeisten Asynchronmaschine.

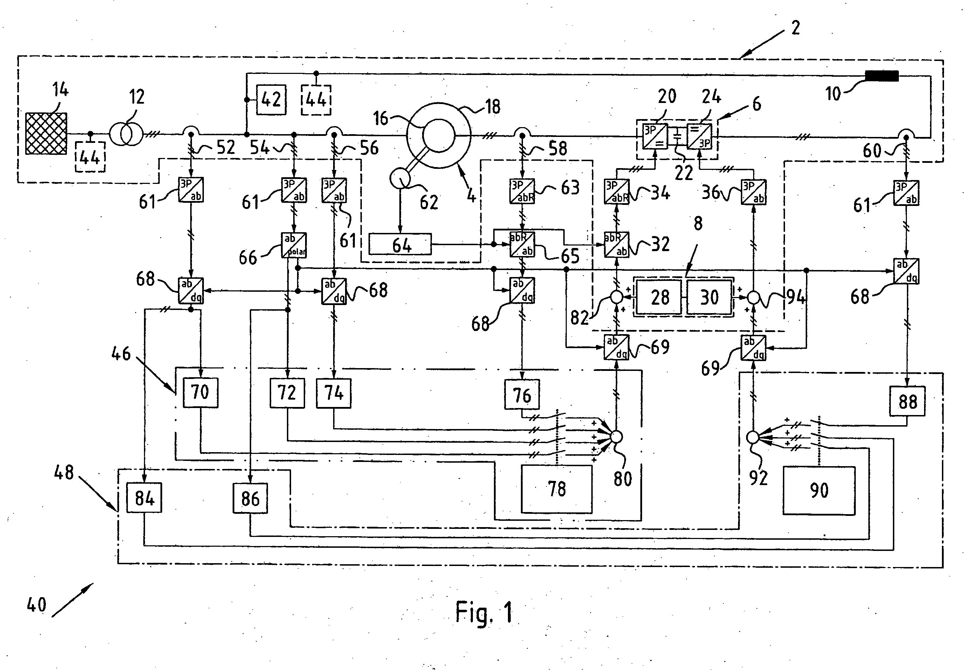

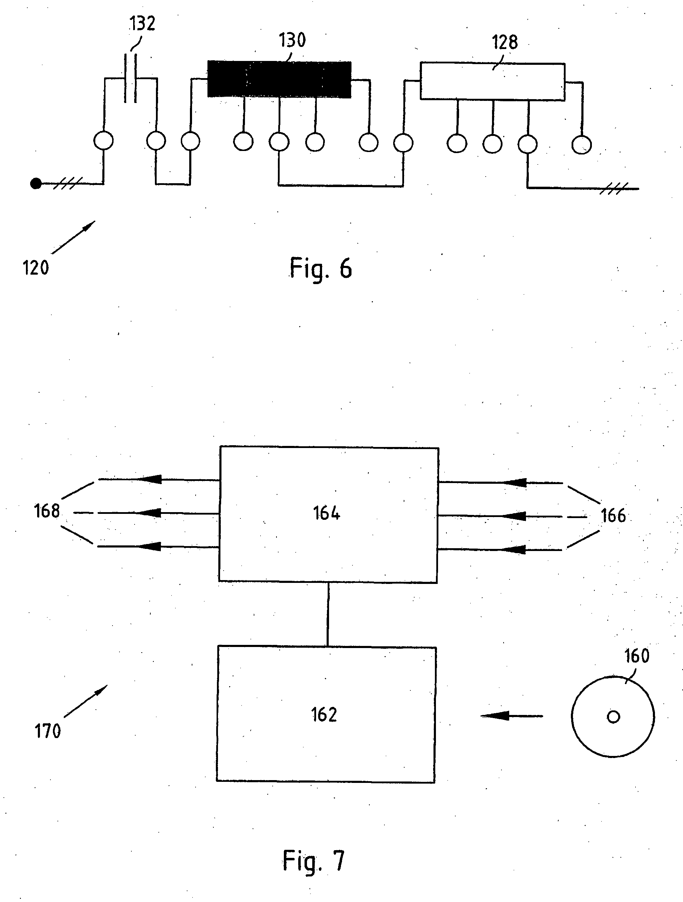

Fig. 1 zeigt das Blockschaltbild eines ersten Ausführungsbeispiels einer erfindungsgemäßen Vorrichtung zur Regelung einer doppelt gespeisten Asynchronmaschine 4. In dem dargestellten Ausführungsbeispiel ist die doppelt gespeiste Asynchronmaschine 4 in einem System 2 angeordnet, wobei das System einen Zwischenkreisumrichter 6, ein Regelglied 8, eine Drossel 10, einen optionalen Transformator 12 und ein Netz 14 aufweist. Die doppelt gespeiste Asynchronmaschine 4 kann beispielsweise in einem Windkraftwerk oder einem Wasserkraftwerk zur Erzeugung elektrischer Energie verwendet werden. Sie weist einen Rotor 16 und einen Stator 18 auf. Der Zwischenkreisumrichter 6 weist einen rotorseitigen Umrichter 20, einen Zwischenkreis 22 und einen netzseitigen Umrichter 24 auf, wobei der rotorseitige Umrichter 20 mit dem Zwischenkreis 22 und der Zwischenkreis 22 mit dem netzseitigen Umrichter 24 elektrisch verbunden ist. Der Rotor 16 ist elektrisch mit dem rotorseitigen Umrichter 20 verbunden. Die Drossel 10 ist elektrisch mit dem netzseitigen Umrichter 24 sowie dem Stator 18 verbunden. Das Regelglied '8 weist ein rotorseitiges Regelglied 28 und ein netzseitiges Regelglied 30 auf. Die Regelsignale werden im Regelglied 8 in ruhenden ab-Koordinaten erzeugt. Für die Regelung des rotorseitigen Umrichters ist daher eine Transformation in rotorfeste abR-Koordinaten mit einem ab/abR-Wandler 32 nötig. Die für diese Transformation notwendige Eingangsgröße der Rotorposition wird über einen am Rotor 16 angeschlossenen Drehmesser 62 ermittelt und über einen daran angeschlossenen Wertgeber 64 an den ab/abR-Wandler 32 weitergeleitet. Der abR/3P-Wandler 34 transformiert das Regelsignal aus dem abR-Koordinatensystem in das dreiphasige 3P-Koordinatensystem. Der ab/3P-Wandler 36 transformiert das Regelsignal direkt aus dem ab- in das 3P-Koordinatensystem. Das bisher beschriebene System 2 stellt den Stand der Technik dar. Gemäß dem vorliegenden Ausführungsbeispiel der erfindungsgemäßen Vorrichtung zeigt das in Fig. 1 dargestellte Blockschaltbild ein Software-basiertes Dämpfungsglied 40 sowie ein optionales Hardware-basiertes Dämpfungsglied 44. Das Hardware-basierte Dämpfungsglied 44 kann beispielsweise wie das in Fig. 6 gezeigte Dämpfungsglied ausgebildet sein. Weiterhin ist noch ein Netzfilter 42 mit unveränderbaren Dämpfungseigenschaften vorgesehen.

Das Software-basierte Dämpfungsglied 40 weist ein rotorseitiges Dämpfungsglied 46 und ein statorseitiges Dämpfungsglied 48 auf. Die gemessenen Größen Netzstrom $i_G$ 52, Statorspannung $u_S$ 54, Statorstrom $i_S$ 56, der Strom des rotorseitigen Umrichter $i_{MSC}$ 58 sowie der Strom des netzseitigen Umrichter $i_{LSC}$ 60 werden mit jeweils einem 3P/ab-Wandler 61 bzw. mit einem 3P/abR-Wandler 63 und einem abR/ab-Wandler 65 zunächst in ruhenden ab-Koordinaten transformiert. Die Statorspannung $u_S$ wird weiter über einen ab/polar-Wandler 66 in das Polar-Koordinatensystem transformiert. Die Werte für den Netzstrom $i_G$, den Statorstrom $i_S$, den Rotorstrom $i_{MSC}$ und den Drosselstrom $i_{LSC}$ werden durch ab/dq-Wandler 66 weiter vom ab-Koordinatensystem in das mit Netzfrequenz rotierende dq-Koordinatensystem transformiert. Der für diese Transformation notwendige Wert der Phase der Statorspannung wird von dem ab/polar-Wandler 66 an alle ab/dq-Wandler 68 weitergeleitet. Die Werte des Netzstroms $i_G$, der Statorspannung $u_G$, des Statorstroms $i_S$ sowie des Stroms des rotorseitigen Umrichters $i_{MSC}$ liegen als Eingangsgrößen am rotorseitigen Dämpfungsglied 46 an. Das rotorseitige Dämpfungsglied weist Module 70, 72, 74 und 76 auf, in die jeweils eine der anliegenden Eingangsgrößen eingespeist und mit Hilfe einer zugehörigen Übertragungsfunktion die jeweilige Ausgangsgröße berechnet wird. Das Modul 70 bestimmt aus der Eingangsgröße des Netzstroms $i_G$ mit der zeitdiskreten Übertragungsfunktion $G_{iG,r}[z]$ eine zugehörige Ausgangsgröße. Analog berechnete das Modul 72 entsprechend $G_{uS,r}[z]$ aus der Statorspannung $u_S$, das Modul 74 entsprechend $G_{iS,r}[z]$ aus dem Statorstrom $i_S$ und das Modul 76 entsprechend $G_{iMSC,r}[z]$ aus dem Strom des rotorseitigen Umrichter $i_{MSC}$ die jeweils zugehörige Ausgangsgröße. Die Übertragungsfunktionen sind vorzugsweise so gewählt, dass die Resonanzen des Systems 2 durch das Dämpfungsglied 46 rotorseitig gedämpft werden.

In dem Addierer 80 werden die in den Modulen 70, 72, 74 und 76 berechneten Signale selektiv addiert. Die Selektion der Signale erfolgt durch den Block 78. Bei der Selektion werden dabei beispielsweise die Netzzustände und die verfügbare Sensorik berücksichtigt. Auf diese Weise kann die Erzeugung des Dämpfungssignals an die Eingangsgrößen mit den besten Übertragungseigenschaften angepasst werden. Mit einem dq/ab-Wandler 69 wird das rotorseitige Dämpfungssignal dann von synchronen dq-Koordinaten in ab-Koordinaten transformiert, so dass es in dem Additionsmodul 82 zu dem ebenfalls in ab-Koordinaten vorliegenden Signal des rotorseitigen Regelgliedes 28 addiert werden kann. Auf diese Weise wird unmittelbar auf das Regelsignal des Regelgliedes 28 aktiv Einfluss genommen, um die Dämpfungseigenschaften zu verändern. Die Werte des Netzstroms $i_G$ 52, der Statorspannung $u_S$ 54 und des Stroms des netzseitigen Umrichters $i_{LSC}$ 60 liegen als Eingangsgrößen an den Modulen 84, 86 und 88 an. Das Modul 84 bestimmt aus der Eingangsgröße Netzstrom $i_G$ mit der zeitdiskreten Übertragungsfunktion $G_{iG,s}[z]$ eine zugehörige Ausgangsgröße. Analog berechnet das Modul 86 entsprechend $G_{uS,s}[s]$ aus der Statorspannung $u_S$ und das Modul 88 entsprechend $G_{iLSC,s}[z]$ aus dem Strom des netzseitigen Umrichters $i_{LSc}$ die jeweils zugehörige Ausgangsgröße. Die Übertragungsfunktionen sind dabei so gewählt, dass die Resonanzen des Systems 2 durch das Dämpfungsglied 48 netzseitig gedämpft werden. In dem Addierer 92 werden die in den Modulen 84, 86 und 88 berechneten Signale selektiv addiert. Die Selektion der Signale erfolgt durch den mit dem Block 78 vergleichbaren Block 90. Das netzseitige Dämpfungssignal wird dann mit einem dq/ab-Wandler 69 in ab-Koordinaten transformiert, so dass es in dem Additionsmodul 94 zu dem ebenfalls in ab-Koordinaten vorliegenden Signal des netzseitigen Regelgliedes 30 addiert werden kann.

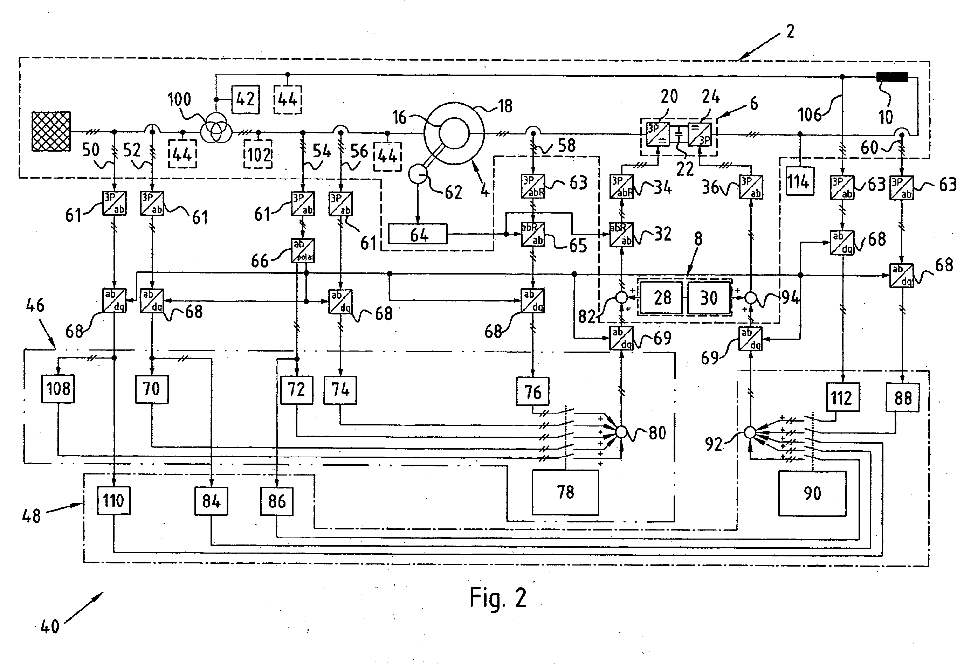

Fig. 2 zeigt das Blockschaltbild eines zweiten Ausführungsbeispiels einer erfindungsgemäßen Vorrichtung zur Regelung einer doppelt gespeisten Asynchronmaschine 4. Das zweite Ausführungsbeispiel ist besonders für große Megawatt-Windanlagen geeignet. Im Unterschied zum ersten Ausführungsbeispiel wird ein Dreiwicklungstransformator 100 zum Anschluss der doppelt gespeisten Asynchronmaschine 4 an das Netz verwendet. Damit ist das dargestellte Ausführungsbeispiel auch für die Abgabe sehr hoher elektrischer Leistungen geeignet. Weiterhin ist ein weiterer Filter 102 im Statorzweig angeschlossen. Der weitere Filter kann beispielsweise ein Hardware-basiertes Dämpfungsglied mit unveränderlichen Dämpfungseigenschaften aufweisen. Zwischen der Drossel 10 und dem Transformator 100 wird die Spannung des netzseitigen Wechselrichterzweiges $u_{tr,LSC}$ 106 abgegriffen und über zwei Wandler 36, 68 in dq-Koordinaten transformiert. Auch die Netzspannung uG 50 wird über zwei Wandler 36, 38 in dq-Koordinaten transformiert. In Modul 108 wird mit der Übertragungsfunktion $G_{uG,r}[z]$ und der Netzspannung $u_G$ ein weiteres Signal erzeugt, welches zu den zuvor beschriebenen Signalen des rotorseitigen Dämpfungsgliedes 46 selektiv addiert werden kann. Das netzseitige Dämpfungsglied 48 wird um zwei weitere selektiv addierbare Signale erweitert. Dies sind zum einen das aus Netzspannung uG sowie der Übertragungsfunktion $G_{uG,s}[z]$ in Modul 110, sowie zum anderen aus der Spannung des netzseitigen Wechselrichterzweiges des Dreiphasentransformators $u_{tr,LSC}$ sowie der Übertragungsfunktion $G_{utr,LSC,s}[z]$ in Modul 112 erzeugte Signal. In Fig. 2 ist weiterhin ein optionales Anregungsglied 114 vorgesehen, welches alternativ auch an einer anderen Stelle angeschlossen werden kann. Das Anregungsglied weist einen Signalgeber auf, der ein Signal in einem Frequenzbereich bis 2000 Hz, vorzugsweise bis 1200 Hz erzeugen und damit die Regelstrecke des Zwischenkreisumrichters anregen kann. Das Anregungsglied 114 kann weiterhin Messgeräte aufweisen, welche die Antwortfunktion der Regelstrecke messen. Das Anregungsglied 114 kann beispielsweise eine elektronische Schaltung, insbesondere einen Mikroprozessor und einen Speicher mit Befehlen, enthalten, die aus der gemessenen Antwortfunktion der Regelstrecke neue Übertragungsfunktionen für die Module 70, 72, 74, 6, 84, 88, 108, 110 berechnen und in diese über eine elektrische Datenverbindung (nicht gezeigt) einspeisen.

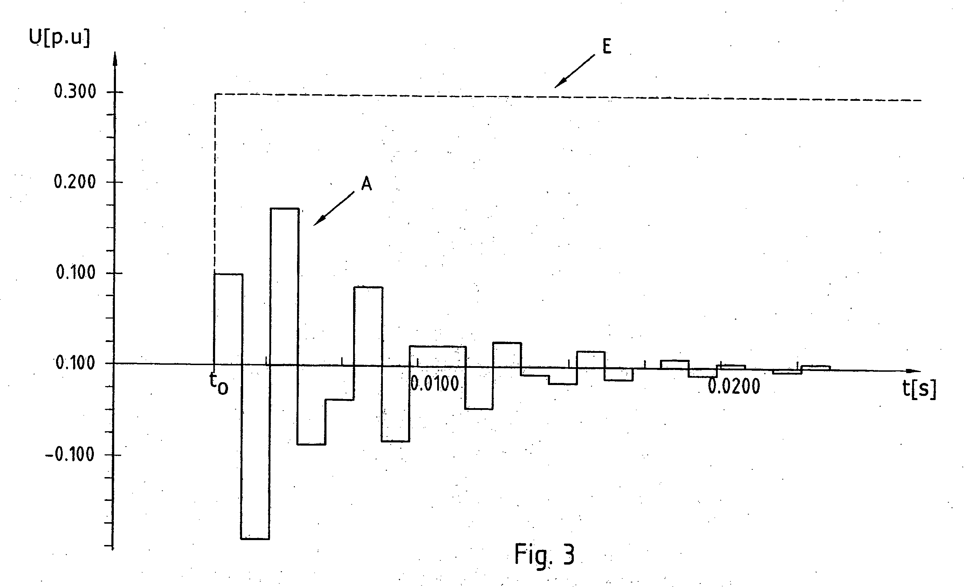

In den Fig. 3-5 sind berechnete Ergebnisse eines Ausführungsbeispiels dargestellt. Als Übertragungsfunktion G(z) kann die folgende diskrete Funktion gewählt werden:

$$\underline{G}(z) = \frac{\underline{A}(z^{-1})}{\underline{E}(z^{-1})} = \frac{\sum_{j=1}^{m}\left(1 + \underline{C}_j \cdot z^{-1}\right)^j - \sum_{j=1}^{m}\left(1 + \underline{C}_j\right)^j}{1 + \sum_{k=1}^{n}\underline{D}_k \cdot z^{-k}} \cdot \underline{V} \tag{1}$$

mit

$$\underline{V} = V \cdot e^{j\psi} \tag{2}$$

Dabei ist $\underline{A}$ die Ausgangsgröße und $\underline{E}$ die Eingangsgröße des zugehörigen Moduls, $\underline{C}_j$ und $\underline{D}_k$ wählbare komplexe Parameter und $\underline{V}$ ist eine wählbare komplexe Gesamtverstärkung. Bei einer geeignete Wahl der Koeffizienten $\underline{C}_j$ und $\underline{D}_k$ bewirkt das zugehörige Dämpfungsglied eine Dämpfung von Resonanzen bzw. Instabilitäten, die im System 2 durch die Wechselwirkung der Regelung 8 mit dem Netz 14 und dem Netzfilter (nicht gezeigt) entsteht.

Beispielsweise eignet sich bei einem Regelungssystem mit einer Abtastfrequenz von 2250 Hz und Instabilitäten im Bereich zwischen 600 Hz und 800 Hz ein Dämpfungsglied mit einem Modul mit einer Übertragungsfunktion nach Gleichung (1) mit den folgenden Parametern:

m = 5
$C_2$ = -0.8
$C_5$ = -0.6
$C_1 = C_3 = C_4 = 0$

und

n = 3
$D_1$ = 0.5
$D_2$ = 0
$D_3$ = -0 . 4

In Fig. 3 ist die Sprungantwort für dieses Modul dargestellt. Auf der Abszisse ist die Zeigt t in Sekunden, auf der Ordinate ist die Spannung U in p.u. angegeben. Die Eingangsgröße E wird zu einem Zeitpunkt $t_0$ von 0 auf den Wert 0,3 eingeschaltet und bleibt dann konstant. Die Ausgangsgröße A zeigt daraufhin einen gedämpften, oszillierenden Verlauf. Nach 0,02 Sekunden ist A fast vollständig abgeklungen. Es zeigt sich somit, dass das entsprechende Modul eine stabile Sprungantwort aufweist. Dies ist vorteilhaft, da auf diese Weise verhindert wird, dass durch das Dämpfungsglied zusätzliche Instabilitäten in das System 2 eingeführt werden.

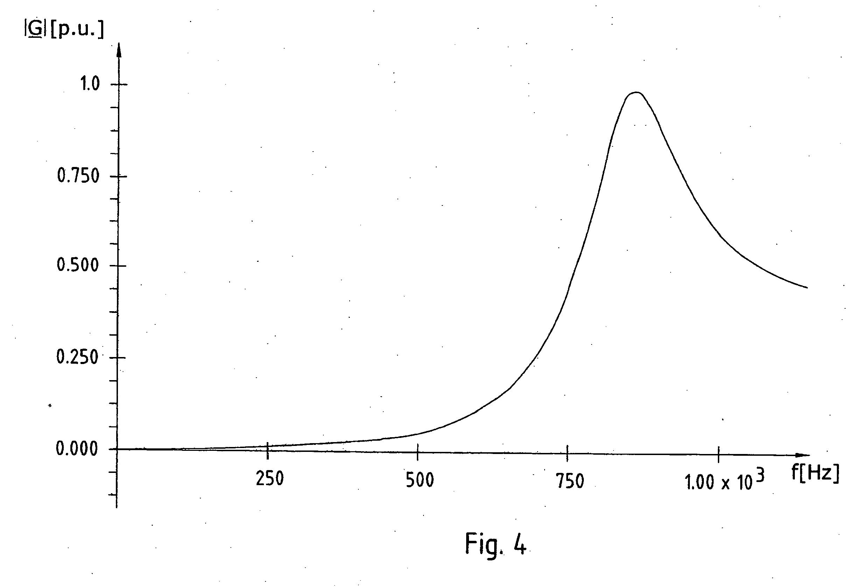

Fig. 4 zeigt den Frequenzgang der Amplitude des Dämpfungsgliedes. Auf der Abszisse ist die Frequenz f in Hertz, auf der Ordinate ist der Betrag G der Amplitude in p.u. angegeben. Es ist zu erkennen, dass die Amplitude im Bereich von etwa 600 bis über 1000 Hz eine signifikante Ausgangsgröße aufweist.

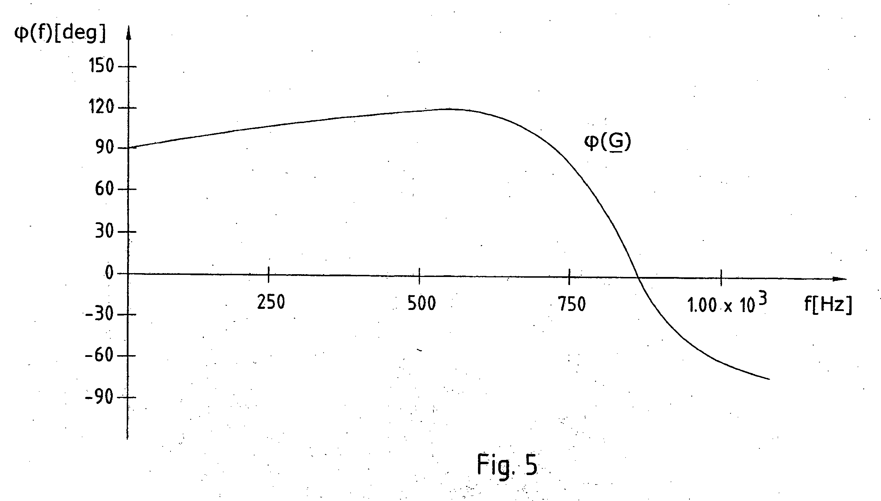

In Fig. 5 ist der zugehörige Phasengang über der Frequenz dargestellt. Auf der Abszisse ist die Frequenz f in Hertz, auf der Ordinate die Phase φ in Grad angegeben.

Der eingeschwungene Zustand der Regelung entspricht im dq-Koordinatensystem 0 Hz. Das Dämpfungsglied ist dergestalt ausgeführt, dass bei 0 Hz keine Ausgangsgröße erzeugt wird. Damit wird die standardmäßige Regelung im eingeschwungenen Zustand nicht beeinflusst. Im aktiven Frequenzbereich der Dämpfung trägt diese zu einer deutlichen Stabilisierung des Gesamtsystems bei.

Durch die Veränderung der komplexen Gesamtverstärkung $\underline{V}$ in Betrag V und Winkel ψ kann die Amplitude sowie die Phasenlage des Dämpfungssignals angepasst werden.

Fig. 6 zeigt ein Ausführungsbeispiel für ein Hardware-basiertes Dämpfungsglied 120. Dieses verfügt in jedem der drei Phasenzweige über einen Widerstand 128 mit verschiedenen Abgriffen, eine Induktivität 130 mit verschiedenen Anzapfungen sowie eine Kapazität 132. Damit ist es möglich, das Dämpfungsverhalten an unterschiedliche Gegebenheiten anzupassen. Alternativ könnte auch die Kapazität 132 verschiedene Abgriffe aufweisen oder es könnten verschiedene Kapazitäten vorgehalten werden.

In Fig. 7 ist ein Blockschaltbild eines Ausführungsbeispieles für die Ausführung eines Verfahrens zur Regelung einer doppelt gespeisten Asynchronmaschine mit einem Computerprogramm durch einen Prozessor dargestellt. Das Computerprogramm ist zunächst auf einem Datenträger 160 gespeichert und wird über ein geeignetes Datenträger-Lesegerät (nicht gezeigt) in den Speicher 162 geladen. Der Speicher 162 ist mit einer Prozessoreinheit 164 verbunden, die einen Prozessor aufweist, der die in dem Computerprogramm gespeicherten Befehle ausführt. Die Prozessoreinheit weist weiterhin einen oder mehrere Eingänge 166 auf, über die Eingangsgrößen in die Prozessoreinheit 164 gelangen können. Die Prozessoreinheit 164 weist weiterhin noch mindestens einen oder mehrere Ausgänge 168 auf. In einer solchen Recheneinheit 170 mit einer Prozessoreinheit 164 und einem Speicher 162 können beispielsweise die für die Module 70, 72, 74, 76, 84, 88, 108, 110 benötigten Ausgangsgrößen berechnet werden. Dabei ist in dem Computerprogramm die dem Modul zugehörige Übertragungsfunktion G(z) implementiert. Über die Eingänge 166 empfängt die Prozessoreinheit 164 die zu dem Modul gehörige Eingangsgröße, mit der durch Ausführung der Befehle des Computerprogramms in der Prozessoreinheit 164 die zugehörige Ausgangsgröße berechnet wird. In einer solchen Recheneinheit 170 können auch neue Übertragungsfunktionen für die Module 70, 72, 76, 84, 88, 108, 110 berechnet werden, indem in dem Computerprogramm ein Algorithmus implementiert wird, welcher die durch das Anregungsglied 114 hervorgerufene Antwortfuntiön der Regelstrecke zur Berechnung der neuen Übertragungsfunktionen nützt. Über den Eingang 166 empfängt die Prozessoreinheit 164 die Antwortfunktion der Regelstrecke, mit der durch Ausführung der Befehle des Computerprogramms in der Prozessoreinheit 164 die neuen Übertragungsfunktionen berechnet werden. Diese können dann für die entsprechenden Module 70, 72, 74, 76, 84, 88, 108, 110 verwendet werden.

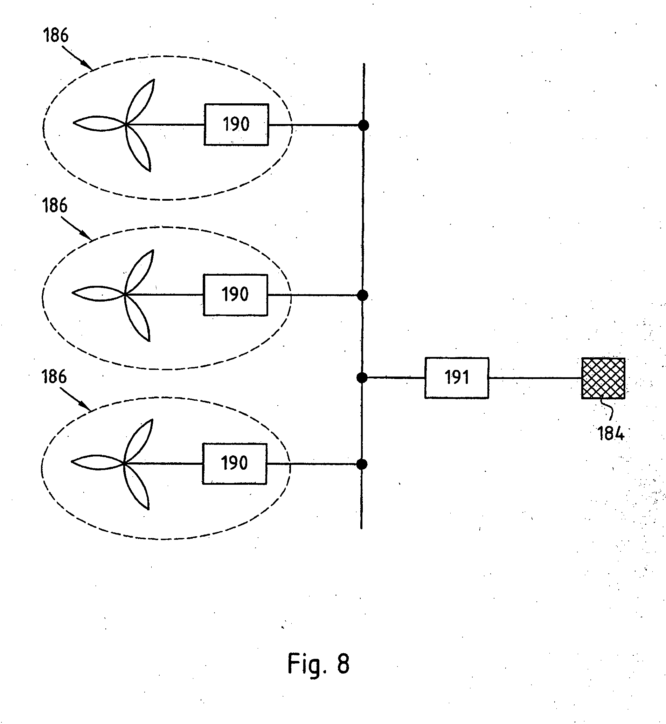

Fig. 8 zeigt einen Windpark mit mehreren Windenergieanlagen 186, welche mit einer erfindungsgemäßen Vorrichtung 190 ausgestattet und über einen gemeinsamen Verknüpfungspunkt 191 an ein Netz 184 angeschlossen sind. Alternativ ist es auch denkbar, die erfindungsgemäße Vorrichtung 190 nicht in jeder einzelnen Windenergieanlage 186, sondern im gemeinsamen Verknüpfungspunkt 191 zu installieren. Die Resonanzeigenschaften dieses Systems können durch die Netzeigenschaften des Netzes 184 beeinflusst werden. Sie können sich aber beispielsweise auch ändern, wenn eine weitere Windkraftanlage an den Verknüpfungspunkt 191 angeschlossen wird oder eine bestehende Windkraftanlage 186 von dem Verknüpfungspunkt 191 getrennt wird. In diesen Fällen kann die erfindungsgemäße Vorrichtung 190 an die neuen Resonanzeigenschaften angepasst werden.

**Patentansprüche**

1. Vorrichtung zur Regelung einer doppelt gespeisten Asynchronmaschine (4) für eine Energieerzeugungsanlage, insbesondere für eine Wind- oder Wasserkraftanlage, mit einem Zwischenkreisumrichter (6), welcher rotorseitig an die doppelt gespeiste Asynchronmaschine (4) angeschlossen ist, wobei der Zwischenkreisumrichter (6) einen rotorseitigen (20) und einen netzseitigen Umrichter (24) aufweist, und mindestens ein Regelglied (8) zur Regelung des Zwischenkreisumrichters (6) vorgesehen ist,
**dadurch gekennzeichnet,**
**dass** mindestens ein Software- und/oder Hardware-basiertes Dämpfungsglied (40, 46, 48, 120) vorgesehen ist, welches veränderbare Dämpfungseigenschaften aufweist, so dass die Dämpfungseigenschaften des mindestens einen Dämpfungsgliedes (40, 46, 48, 120) an veränderte Resonanzeigenschaften des Netzes angepasst werden können,
wobei
das mindestens eine Hardware-basierte Dämpfungsglied (120) wenigstens eine resistive (128) und/oder eine induktive Komponente (130) aufweist, welche in ihrer Impedanz veränderbar ist und die wenigstens eine resistive (128) und/oder induktive Komponente (130) mehrere Abgriffe oder Anzapfungen aufweist, mindestens ein Software-basiertes netzseitiges und/oder rotorseitiges Dämpfungsglied (46, 48) vorgesehen ist, welches ein Dämpfungssignal erzeugt und Mittel (82, 94) vorgesehen sind, welche das in den Umrichter gespeiste Stellsignal seriell oder parallel aus dem mit dem Regelglied erzeugten Regelsignal und dem Dämpfungssignal erzeugen.

2. Vorrichtung nach Anspruch 1,
**dadurch gekennzeichnet,**
**dass** die Dämpfungseigenschaften des mindestens einen Dämpfungsglieds (40, 46, 48, 120) im Frequenzbereich bis 2000 Hz, vorzugsweise bis 1200 Hz variabel einstellbar sind.

3. Vorrichtung nach Anspruch 1 oder 2,
**dadurch gekennzeichnet,**
**dass** Mittel vorgesehen sind, durch die der Statorstrom $i_S$, die Statorspannung $u_S$, der Strom des rotorseitigen Umrichters $i_{MSC}$, der Netzstrom $i_G$ und/oder die Netzspannung $u_G$ ermittelt werden und als Eingangsgrößen am rotorseitigen Dämpfungsglied (46) zur Verfügung stehen.

4. Vorrichtung nach einem der Ansprüche 1 bis 3,
**dadurch gekennzeichnet,**
**dass** Mittel vorgesehen sind, durch die der Strom des netzseitigen Umrichters $I_{LSC}$, der Netzstrom $i_G$'' die Netzspannung $u_G$, die Spannung des netzseitigen Wechselrichterzweiges des Dreiphasentransformators $u_{tr,LSC}$ und/oder die Statorspannung $u_S$ ermittelt werden und als Eingangsgrößen am netzseitigen Dämpfungsglied (48) zur Verfügung stehen.

5. Vorrichtung nach einem der Ansprüche 1 bis 4,
**dadurch gekennzeichnet,**
**dass** Mittel (114) vorgesehen sind, mit denen die Regelstrecke des Zwischenkreisumrichters (6) in einem Frequenzbereich bis 2000 Hz, vorzugsweise bis 1200 Hz angeregt werden kann.

6. Vorrichtung nach einem der Ansprüche 1 bis 5,
**dadurch gekennzeichnet,**
**dass** Mittel vorgesehen sind, mit denen die Dämpfungsfunktion für mindestens ein Dämpfungsglied (40, 46, 48, 120) berechnet werden kann.

7. Vorrichtung nach einem der Ansprüche 1 bis 6,
**dadurch gekennzeichnet,**
**dass** mindestens ein Dämpfungsglied (40, 46, 48, 120) einen im Wesentlichen über den gesamten Frequenzbereich bis 2000 Hz, vorzugsweise bis 1200 Hz, konstanten zusätzlichen Phasenvorschub bewirkt.

8. Vorrichtung nach einem der Ansprüche 1 bis 7,
**dadurch gekennzeichnet,**
**dass** mindestens ein Dämpfungsglied (42) vorgesehen ist, welches unveränderbare Dämpfungseigenschaften aufweist.

9. Verfahren zur Regelung einer doppelt gespeisten Asynchronmaschine (4) für eine Energieerzeugungsanlage, insbesondere für eine Wind- oder Wasserkraftanlage mit einem Zwischenkreisumrichter (6) und einer Vorrichtung nach einem der Ansprüche 1 bis 8, bei dem Netzeigenschaften ermittelt, insbesondere gemessen werden,
**dadurch gekennzeichnet,**
**dass** Hardware- und/oder Software-basierte Dämpfungsglieder (40, 46, 48, 120) vorgesehen sind, welche veränderbare Dämpfungseigenschaften aufweisen, und die Dämpfungseigenschaften mindestens eines Hardware- und/oder Software-basierten Dämpfungsgliedes (40, 46, 48, 120) nachträglich an veränderte Resonanzeigenschaften des Netzes angepasst werden.

10. verfahren nach Anspruch 9,
**dadurch gekennzeichnet,**
**dass** die Regelstrecke im Frequenzbereich bis 2000 Hz, vorzugsweise bis 1200 Hz angeregt, die Antwortfunktion der Regelstrecke gemessen und mindestens ein Dämpfungsglied (40, 46, 48, 120) in Abhängigkeit der Antwortfunktion angepasst wird.

11. Verfahren nach Anspruch 9 oder 10,
**dadurch gekennzeichnet,**
**dass** der Statorstrom $i_S$, die Statorspannung $u_S$, der Strom des rotorseitigen Umrichters $i_{MSC}$, der Strom des netzseitigen Umrichters $I_{LSC}$, die Spannung des netzseitigen Wechselrichterzweiges des Dreiphasentransformators $u_{tr,LSC}$, der Netzstrom $i_G$ und/oder die Netzspannung $u_G$ ermittelt werden und dass von mindestens einem Dämpfungsglied (40, 46, 48) ein von mindestens einer dieser Größen abhängiges Dämpfungssignal erzeugt wird.

**12.** Verfahren nach Anspruch 11,
**dadurch gekennzeichnet,**
**dass** das Dämpfungssignal in mit Netzfrequenz mitbewegten dq-Koordinaten berechnet wird.

**13.** Verfahren nach einem der Ansprüche 9 bis 12,
**dadurch gekennzeichnet,**
**dass** das netzseitig und/oder rotorseitig in den Umrichter gespeiste Stellsignal aus einem Dämpfungssignal und dem netzseitigen und/oder rotorseitigen Regelsignal, insbesondere durch Addition, erzeugt wird, wobei optional jeweils ein Dämpfungsglied (40, 46, 48) zur Erzeugung des Dämpfungssignals vorgesehen ist.

**14.** Verfahren nach Anspruch 13,
**dadurch gekennzeichnet,**
**dass** die Kombination, insbesondere die Addition des Dämpfungssignals mit dem Regelsignal in ruhenden ab-Koordinaten erfolgt.

**15.** Ein Computerprogramm mit Befehlen, deren Ausführung einen Prozessor veranlasst, das Verfahren gemäß einem der Ansprüche 9 bis 14 durchzuführen.

**16.** Ein Computerprogrammprodukt, das ein Computerprogramm enthält mit Befehlen, deren Ausführung einen Prozessor veranlasst, das Verfahren gemäß einem der Ansprüche 9 bis 14 durchzuführen.

**17.** Wind- oder Wasserkraftanlage zur Erzeugung elektrischer Energie mit einer doppelt gespeisten Asynchronmaschine,
**dadurch gekennzeichnet,**
**dass** eine Vorrichtung nach einem der Ansprüche 1 bis 8 vorgesehen ist.

**Claims**

**1.** Device for controlling a double-fed asynchronous machine (4), preferably for a power plant, in particular for a wind or water power plant, comprising an indirect converter (6) which is connected on the rotor side to the double-fed asynchronous machine (4), the indirect converter (6) comprising a rotor-side converter (20) and a line-side converter (24), and at least one control element (8) is provided for controlling the indirect converter (6), **characterised in that** at least one software-based and/or hardware-based damping element (40, 46, 48, 120) is provided which has changeable damping characteristics, so that the damping characteristics of the at least one damping element (40, 46, 48, 120) can be adapted to changed resonance
characteristics of the mains,
wherein the hardware-based damping element (120) has at least one resistive component (128) and/or one inductive component (130), the impedance of which can be changed and the at least one resistive component (128) and/or inductive component (130) has a plurality of taps or tappings, at least one software-based line-side and/or rotor-side damping element (46, 48) is provided which generates a damping signal, and means (82, 94) are provided which generate in series or in parallel the actuating signal, fed into the converter, from the control signal generated by the control element and the damping signal.

**2.** Device according to claim 1, **characterised in that** the damping characteristics of the at least one damping element (40, 46, 48, 120) can be variably adjusted within a frequency range of up to 2000 Hz, preferably up to 1200 Hz.

**3.** Device according to claim 1 or 2, **characterised in that** means are provided by which the stator current is, the stator voltage $u_S$, the current of the rotor-side converter $i_{MSC}$, the mains current $i_G$ and/or the mains voltage $u_G$ are determined and are provided as input quantities at the rotor-side damping element (46).

**4.** Device according to any one of claims 1 to 3, **characterised in that** means are provided by which the current of the line-side converter $i_{LSC}$, the mains current $i_G$, the mains voltage $u_G$, the voltage of the line-side inverter branch of the three-phase transformer $u_{tr,LSC}$ and/or the stator voltage $u_S$ are determined and are provided as input quantities at the line-side damping element (48).

5. Device according to any one of claims 1 to 4, **characterised in that** means (114) are provided by which the controlled system of the indirect converter (6) can be excited within a frequency range of up to 2000 Hz, preferably up to 1200 Hz.

6. Device according to any one of claims 1 to 6, **characterised in that** means are provided which can calculate the damping function of at least one damping element (40, 46, 48, 120).

7. Device according to any one of claims 1 to 6, **characterised in that** at least one damping element (40, 46, 48, 120) produces an additional phase advance which is substantially constant over the entire frequency range of up to 2000 Hz, preferably up to 1200 Hz.

8. Device according to any one of claims 1 to 7, **characterised in that** at least one damping element (42) is provided which has unchangeable damping characteristics.

9. Method for controlling a double-fed asynchronous machine (4) for a power plant, in particular for a wind or water power plant comprising an indirect converter (6) and a device according to any one of claims 1 to 8, in which mains characteristics are determined, in particular measured, **characterised in that** hardware-based and/or software-based damping elements (40, 46, 48, 120) are provided which have changeable damping characteristics, and the damping characteristics of at least one hardware and/or software-based damping element (40, 46, 48, 120) are subsequently adapted to changed resonance characteristics of the mains.

10. Method according to claim 9, **characterised in that** the controlled system is excited within a frequency range of up to 2000 Hz, preferably up to 1200 Hz, the response function of the controlled system is measured and at least one damping element (40, 46, 48, 120) is adapted as a function of the response function.

11. Method according to either claim 9 or claim 10, **characterised in that** the stator current is, the stator voltage $u_S$, the current of the rotor-side converter $i_{MSC}$, the current of the line-side converter $i_{LSC}$, the voltage of the line-side inverter branch of the three-phase transformer $u_{tr,LSC}$, the mains current $i_G$ and/or the mains voltage $u_G$ are determined and **in that** a damping signal, which is dependent on at least one of these quantities, is generated by at least one damping element (40, 46, 48).

12. Method according to claim 11, **characterised in that** the damping signal is calculated in dq-coordinates which are moved together with the mains frequency.

13. Method according to any one of claims 9 to 12, **characterised in that** the actuating signal fed into the converter on the line side and/or on the rotor side is generated, in particular by addition, from a damping signal and the line-side and/or rotor-side control signal, a respective damping element (40, 46, 48) being optionally provided to generate the damping signal.

14. Method according to claim 13, **characterised in that** the combination, in particular the addition of the damping signal and the control signal takes place in stationary ab-coordinates.

15. A computer program with commands, the implementation of which induces a processor to carry out the method according to any one of claims 9 to 14.

16. A computer program product which contains a computer program with commands, the implementation of which induces a processor to carry out the method according to any one of claims 9 to 14.

17. Wind or water power plant for generating electrical energy, with a double-fed asynchronous machine, **characterised in that** a device according to any one of claims 1 to 8 is provided.

**Revendications**

1. Dispositif pour réguler une machine asynchrone à double alimentation (4) pour une centrale de production d'énergie, en particulier pour une centrale éolienne ou centrale hydroélectrique, avec un convertisseur intermédiaire (6) raccordé côté rotor à la machine asynchrone à double alimentation (4), le convertisseur indirect (6) présentant un convertisseur (20) côté rotor et un convertisseur (24) côté réseau, et au moins un élément de régulation (8) pour réguler le convertisseur indirect (6),

**caractérisé en ce que**

au moins un élément d'atténuation (40,46,48,120) basé sur un logiciel et/ou matériel est prévu, lequel présente des propriétés d'atténuation modifiables de sorte que les propriétés d'atténuation de cet au moins un élément d'atténuation (40, 46, 48, 120) peuvent être adaptées à des propriétés de résonance modifiées du réseau, cet au moins un élément d'atténuation basé sur du matériel (120) présentant au moins un composant résistif (128) et/ou un composant inductif (130) pouvant être modifié concernant son impédance, et cet au moins un composant résistif (128) et/ou inductif (130) présentant plusieurs prises ou soutirages, au moins un élément d'atténuation côté réseau et/ou côté rotor basé sur un logiciel (46,48) étant prévu, lequel génère un signal d'atténuation, et des moyens (82,94) étant prévus, lesquels génèrent le signal de réglage alimentant le convertisseur, de manière sérielle ou parallèle, à partir du signal de régulation généré par l'élément de régulation et du signal d'atténuation.

2. Dispositif selon la revendication 1,

   **caractérisé en ce que**

   les propriétés d'atténuation de cet au moins un élément d'atténuation (40, 46, 48, 120) peuvent être réglées de manière variable dans la plage de fréquences jusqu'à 2000 Hz, de préférence jusqu'à 1200 Hz.

3. Dispositif selon la revendication 1 ou 2,

   **caractérisé en ce que**

   des moyens sont prévus grâce auxquels le courant de stator is, la tension de stator us, le courant du convertisseur côté rotor $i_{MSC}$, le courant du réseau $i_G$ et/ou la tension du réseau $u_G$ sont déterminés et sont mis à disposition en tant que grandeurs d'entrée au niveau de l'élément d'atténuation (46) côté rotor.

4. Dispositif selon l'une des revendications 1 à 3,

   **caractérisé en ce que**

   des moyens sont prévus grâce auxquels le courant du convertisseur côté réseau $i_{LSC}$, le courant du réseau $i_G$, la tension du réseau $u_G$, la tension de la branche d'onduleur côté réseau du transformateur triphasé $u_{tr.LSC}$ et/ou la tension de stator $u_S$ sont déterminés et sont mis à disposition en tant que grandeurs d'entrée au niveau de l'élément d'atténuation (48) côté réseau.

5. Dispositif selon l'une des revendications 1 à 4,

   **caractérisé en ce que**

   des moyens (114) sont prévus, avec lesquels le système réglé du convertisseur indirect (6) peut être excité dans une plage de fréquences jusqu'à 2000 Hz, de préférence jusqu'à 1200 Hz.

6. Dispositif selon l'une des revendications 1 à 5,

   **caractérisé en ce que**

   des moyens sont prévus, avec lesquels il est possible de calculer la fonction d'atténuation pour au moins un élément d'atténuation (40, 46, 48, 120).

7. Dispositif selon l'une des revendications 1 à 6,

   **caractérisé en ce qu'**

   au moins un élément d'atténuation (40, 46, 48, 120) provoque une avance de phase supplémentaire constante, sensiblement sur l'ensemble de la plage de fréquences jusqu'à 2000 Hz, de préférence jusqu'à 1200 Hz.

8. Dispositif selon l'une des revendications 1 à 7,

   **caractérisé en ce que**

   l'on prévoit au moins un élément d'atténuation (42), lequel présente des propriétés d'atténuation invariables.

9. Procédé pour réguler une machine asynchrone à double alimentation (4) pour une centrale de production d'énergie, en particulier pour une centrale éolienne ou centrale hydroélectrique, avec un convertisseur intermédiaire (6) et un dispositif selon l'une des revendications 1 à 8, dans lequel des propriétés du réseau sont déterminées, en particulier mesurées,

   **caractérisé en ce que**

   des éléments d'atténuation (40, 46, 48, 120) basés sur du matériel et/ou logiciel sont prévus, lesquels présentent des propriétés d'atténuation modifiables, et **en ce que** les propriétés d'atténuation d'au moins un élément d'atténuation (40,46,48,120) basé sur du matériel et/ou logiciel sont adaptées ultérieurement à des propriétés de résonance modifiées du réseau.

**10.** Procédé selon la revendication 9,
**caractérisé en ce que**
le système réglé est excité dans la plage de fréquences jusqu'à 2000 Hz, de préférence jusqu'à 1200 Hz, la fonction de réponse du système réglé étant mesurée et au moins un élément d'atténuation (40,46,48,120) étant adapté conformément à la fonction de réponse.

**11.** Procédé selon la revendication 9 ou 10,
**caractérisé en ce que**
le courant de stator $i_S$, la tension de stator $u_S$, le courant du convertisseur côté rotor $i_{MSC}$, le courant du convertisseur côté réseau $i_{LSC}$, la tension de la branche d'onduleur côté réseau du transformateur triphasé $u_{tr.LSC}$, le courant de réseau $i_G$ et/ou la tension du réseau $u_G$ sont déterminés et **en ce qu'**au moins un élément d'atténuation (40,46,48) génère un signal d'atténuation dépendant d'au moins l'une de ces grandeurs.

**12.** Procédé selon la revendication 11,
**caractérisé en ce que**
le signal d'atténuation est calculé selon des coordonnées dq déplacées conjointement avec la fréquence du réseau.

**13.** Procédé selon l'une des revendications 9 à 12,
**caractérisé en ce que**
le signal de réglage alimentant le convertisseur côté réseau et/ou côté rotor est produit à partir d'un signal d'atténuation et du signal de régulation côté réseau et/ou côté rotor, en particulier par addition, respectivement un élément d'atténuation (40,46,48) étant prévu de manière optionnelle pour la production du signal d'atténuation.

**14.** Procédé selon la revendication 13,
**caractérisé en ce que**
la combinaison, en particulier l'addition du signal d'atténuation et du signal de régulation s'effectue selon des coordonnées ab au repos.

**15.** Programme informatique avec des commandes dont l'exécution incite un processeur à mettre en oeuvre le procédé selon l'une des revendications 9 à 14.

**16.** Produit de programme informatique, lequel contient un programme informatique avec des commandes dont l'exécution incite un processeur à mettre en oeuvre le procédé selon l'une des revendications 9 à 14.

**17.** Centrale éolienne ou centrale hydroélectrique pour produire de l'énergie électrique avec une machine asynchrone à double alimentation,
**caractérisée en ce que**
l'on prévoit un dispositif selon l'une des revendications 1 à 8.

Fig. 1

Fig. 2

EP 2 351 204 B1

15

Fig. 3

EP 2 351 204 B1

Fig. 4

Fig. 5

EP 2 351 204 B1

132    130    128

120

Fig. 6

168    164    166

160

170    162

Fig. 7

Fig. 8

# EP 2 351 204 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DURSTEWITZ et al.** Netzspezifische Filterauslegung. *Kasseler Symposium Energie-Systemtechnik,* 1998
- **A. GAILLARD et al.** *Active filtering capability of WECS with DFIG for grid power quality improvement,* 30. Juni 2008
- **J. R. MASSING et al.** *Design and control of doubly-fed induction generators with series grid-side converter,* 10. November 2008

- **JOACHIM HOLTZ et al.** Suppression of time-varying resonances in the power supply line of AC locomotives by inverter control. *IEEE Transaction on Industrial Electronics,* 03. Juni 1992, vol. 39 (2
- **M. LINDHOLM et al.** *Harmonic analysis of doubly fed induction generators,* 17. November 2003